# EUROPEAN PATENT APPLICATION

(11) **EP 4 559 969 A1**
(43) Date of publication of application: **28.05.2025**
(21) Application number: 23842873.4
(22) Date of filing: 11.07.2023
(51) Int. Cl.: C08L 23/10, C08K 5/14, C08K 7/14, C08L 23/00, C08L 23/26

(54) **METHOD FOR PRODUCING LONG GLASS FIBER-REINFORCED PROPYLENE RESIN COMPOSITION PELLETS AND METHOD FOR PRODUCING INJECTION MOLDED BODY**

(30) Priority: 20.07.2022 JP 2022115862
(71) Applicant: Prime Polymer Co., Ltd., Tokyo 104-0028 (JP)
(72) Inventor: ODAWARA Akiko, Sodegaura-shi, Chiba 299-0265 (JP); MATSUDA Yuichi, Sodegaura-shi, Chiba 299-0265 (JP); MATSUDA Takeshi, Sodegaura-shi, Chiba 299-0265 (JP)
(74) Representative: J A Kemp LLP
(86) International application number: PCT/JP2023/025548
(87) International publication number: WO 2024/018948

(57) **Abstract**

One aspect of the present invention relates to a method for producing composition pellets, the method including: a step of filling an impregnation die with a melt mixture in which a propylene resin (A), a modified propylene resin (B), an optionally modified polypropylene wax (C) satisfying specific requirements, and an organic peroxide (D) have been melt-mixed with a twin screw extruder, then passing a bundle of long glass fibers (E) through the impregnation die, and impregnating the bundle of long glass fibers (E) with the melt mixture to obtain a strand-shaped molded body; and a step of cutting the strand-shaped molded body to obtain long glass fiber-reinforced propylene resin composition pellets.

## Description

### Technical Field

The present invention relates to a method for producing long glass fiber-reinforced propylene resin composition pellets and a method for producing an injection molded body.

### Background Art

Fiber-reinforced resin molded bodies are utilized in diverse fields such as electrical equipment, automobiles, housing facilities, and medical devices because of their light weight and excellent rigidity and heat resistance. As the fiber-reinforced resin molded bodies, for example, molded bodies using reinforcing fibers, such as glass fibers, and thermoplastic resins, such as polyamide and polypropylene, are known. Such fiber-reinforced resin molded bodies are utilized in the automobile field for members that require high rigidity and heat resistance, such as fan shrouds and propeller fans in the engine room.

As a method for producing coated continuous multifiber strands for use as a raw material for a fiber-reinforced resin molded body, there has been proposed a method of using as an impregnating agent a compound, preferably polyethylene wax, that is non-volatile, has a melting point at least 20°C lower than the melting point of a thermoplastic matrix, and has a viscosity of 2.5 to 100 cS at the application temperature (Patent Literature 1).

### Citation List

### Patent Literature

[Patent Literature 1] JP5662156B

### Summary of Invention

### Technical Problem

Since polyethylene waxes do not have good affinity with polypropylene, the productivity of pellets or appearance in the molded body is not always sufficient.

An object of the present invention is to provide a method for producing long glass fiber-reinforced propylene resin composition pellets that are excellent in productivity and suitable for obtaining a molded body with better appearance, and a method for producing an injection molded body.

### Solution to Problem

As a result of diligent investigations to solve the above-described problem, the present inventors have found that by using a specific polypropylene wax in the production of long glass fiber-reinforced polypropylene resin composition pellets, long glass fiber-reinforced polypropylene resin composition pellets that are excellent in productivity and can yield a molded body with better appearance can be obtained, leading to the completion of the present invention.

That is, the present invention relates to, for example, the following [1] to [12].
[1] A method for producing long glass fiber-reinforced propylene resin composition pellets, the method including: a step of filling an impregnation die with a melt mixture in which a propylene resin (A), a modified propylene resin (B), an optionally modified polypropylene wax (C), and an organic peroxide (D) have been melt-mixed with a twin screw extruder, then passing a bundle of long glass fibers (E) through the impregnation die, and impregnating the bundle of long glass fibers (E) with the melt mixture to obtain a strand-shaped molded body; and a step of cutting the strand-shaped molded body to obtain long glass fiber-reinforced propylene resin composition pellets, wherein the polypropylene wax (C) satisfies the following (I) to (III):
   (I) the melting point (Tm) is in the range of 120 to 165°C as measured with a differential scanning calorimeter (DSC);
   (II) the density is in the range of 890 kg/m³ or more and less than 920 kg/m³; and
   (III) the number average molecular weight (Mn) is in the range of 2,000 to 10,000 and the molecular weight distribution (Mw/Mn) is in the range of 2.0 to 6.0, as measured by gel permeation chromatography (GPC).
[2] The method for producing long glass fiber-reinforced propylene resin composition pellets according to item [1], wherein the melt mixture has a melt flow rate (MFR) in the range of 200 to 600 g/10 min, as measured at a measurement temperature of 230°C and a load of 2.16 kg.
[3] The method for producing long glass fiber-reinforced propylene resin composition pellets according to item [1] or [2], wherein the impregnation die is filled with the melt mixture at a melt temperature in the range of 240 to 320°C.
[4] The method for producing long glass fiber-reinforced propylene resin composition pellets according to any one of items [1] to [3], wherein the polypropylene wax (C) further satisfies the following (IV):
   (IV) the acid number is 50 mgKOH/g or less as measured in accordance with JIS K 0070:1992.
[5] The method for producing long glass fiber-reinforced propylene resin composition pellets according to any one of items [1] to [4], wherein the (A) component, the (B) component, and the (C) component are used in the range of 80 to 98 parts by mass, 1 to 10 parts by mass, and 1 to 10 parts by mass, respectively, provided that the total of the (A), (B), and (C) components is 100 parts by mass, and the (D) component and the (E) component are used in the range of 0.001 to 0.5 parts by mass and 50 to 150 parts by mass, respectively, with respect to 100 parts by mass of the total of the (A), (B), and (C) components.
[6] The method for producing long glass fiber-reinforced propylene resin composition pellets according to any one of items [1] to [5], wherein the strand-shaped molded body is cut into a length of 5 to 9 mm to obtain the long glass fiber-reinforced propylene resin composition pellets.
[7] A method for producing an injection molded body, the method including: a step of obtaining long glass fiber-reinforced propylene resin composition pellets by the production method according to any one of items [1] to [6]; a step of dry blending 10 to 90 parts by mass of the composition pellets obtained in the above step and 90 to 10 parts by mass of olefinic polymer (H) pellets to obtain a mixture, provided that the total of the composition pellets and the olefinic polymer (H) pellets is 100 parts by mass; and a step of injection molding the mixture.
[8] A method for producing an automobile interior and exterior material, the method including a step of obtaining an injection molded body by the production method according to item [7].
[9] Long glass fiber-reinforced propylene resin composition pellets, containing: a propylene resin (A); a modified propylene resin (B); an optionally modified polypropylene wax (C) satisfying the following (I) to (III); and long glass fibers (E);
   (I) the melting point (Tm) is in the range of 120 to 165°C as measured with a differential scanning calorimeter (DSC);
   (II) the density is in the range of 890 kg/m³ or more and less than 920 kg/m³; and
   (III) the number average molecular weight (Mn) is in the range of 2,000 to 10,000 and the molecular weight distribution (Mw/Mn) is in the range of 2.0 to 6.0, as measured by gel permeation chromatography (GPC).
[10] The long glass fiber-reinforced propylene resin composition pellets according to item [9], wherein the polypropylene wax (C) further satisfies the following (IV): (IV) the acid number is 50 mgKOH/g or less as measured in accordance with JIS K 0070:1992.
[11] The long glass fiber-reinforced propylene resin composition pellets according to item [9] or [10], wherein the long glass fiber-reinforced propylene resin composition pellets contain the (A) component, the (B) component, and the (C) component in the range of 80 to 98 parts by mass, 1 to 10 parts by mass, and 1 to 10 parts by mass, respectively, provided that the total of the (A), (B), and (C) components is 100 parts by mass, and contain the (E) component in the range of 50 to 150 parts by mass with respect to 100 parts by mass of the total of the (A), (B), and (C) components.
[12] The long glass fiber-reinforced propylene resin composition pellets according to any one of items [9] to [11], wherein the long glass fiber-reinforced propylene resin composition pellets have a length of 5 to 9 mm.

### Advantageous Effects of Invention

The method for producing long glass fiber-reinforced polypropylene resin composition pellets of the present invention is excellent in the productivity of the composition pellets, and a molded body obtained using the resulting composition pellets has good appearance and has, for example, good physical properties. Accordingly, the above-described composition pellets are suitable as a raw material for a molded body.

### Description of Embodiments

The present invention will be described in further detail. In the following, each component used in the method for producing long glass fiber-reinforced propylene resin composition pellets of the present invention [hereinafter, sometimes abbreviated to "method for producing pellets of the present invention"] and each component used in the method for producing an injection molded body of the present invention will be described, followed by description of each production method of the present invention. In the following description, the propylene resin (A) is also described as "(A) component", and components other than the propylene resin (A) are also described in the same manner.

### <Propylene resin (A)>

The propylene resin (A), one of the components used in the method for producing pellets of the present invention, is a polymer containing propylene-derived structural units as the main structural unit. Examples of the propylene resin (A) include a propylene homopolymer, and a propylene copolymer such as a propylene-α-olefin random copolymer and a propylene block copolymer.

Examples of the propylene copolymer include a random copolymer or block copolymer of propylene, and at least one α-olefin selected from ethylene and α-olefins having 4 to 20 carbon atoms. The content of propylene-derived structural units in the random copolymer is normally 90 to 99 mol%, preferably 92 to 98 mol%. The content of propylene-derived structural units in the block copolymer is normally 70 to 99 mol%, preferably 75 to 98 mol%. The content of each structural unit is measured by nuclear magnetic resonance spectroscopy (NMR).

Specific examples of the α-olefins having 4 to 20 carbon atoms include 1-butene, 2-methyl-1-propene, 2-methyl-1-butene, 3-methyl-1-butene, 1-pentene, 1-hexene, 2-ethyl-1-butene, 2,3-dimethyl-1-butene, 2-methyl-1-pentene, 3-methyl-1-pentene, 4-methyl-1-pentene, 3,3-dimethyl-1-butene, 1-heptene, methyl-1-hexene, dimethyl-1-pentene, ethyl-1-pentene, trimethyl-1-butene, methylethyl-1-butene, 1-octene, methyl-1-pentene, ethyl-1-hexene, dimethyl-1-hexene, propyl-1-heptene, methylethyl-1-heptene, trimethyl-1-pentene, propyl-1-pentene, diethyl-1-butene, 1-nonene, 1-decene, 1-undecene, and 1-dodecene.

The propylene resin (A) may be used alone or as a mixture (composition) of two or more propylene resins (for example, a propylene homopolymer and a propylene copolymer).

The propylene resin (A) may contain structural units derived from at least one biomass-derived monomer (propylene and an α-olefin (including ethylene)). The same type of monomers that constitute the polymer may be solely of a biomass-derived monomer, solely of a fossil fuel-derived monomer, or may contain both a biomass-derived monomer and a fossil fuel-derived monomer. Biomass-derived monomers are monomers derived from any renewable natural raw materials and their residues, such as those of plant or animal origin, including fungi, yeasts, algae, and bacteria, containing the 14C isotope as carbon at a proportion of about 1 × 10⁻¹² and having a biomass carbon concentration (pMC) of about 100 (pMC) as measured in accordance with ASTM D6866. The biomass-derived monomer can be obtained by, for example, conventionally known methods.

It is preferable for the propylene resin (A) to contain structural units derived from a biomass-derived monomer from the viewpoint of reducing environmental load. If the polymer production conditions such as catalyst for polymerization and polymerization temperature are equivalent, even in the case of propylene polymer in which the raw material olefin contains a biomass-derived olefin, the molecular structure is equivalent to that of a propylene polymer composed of fossil fuel-derived monomers except that it contains the 14C isotope in a proportion of about 1 × 10⁻¹². Accordingly, performance is also expected to be the same.

The propylene resin (A) may contain structural units derived from at least one chemical recycling-derived propylene. The propylene that constitutes the polymer may be solely of a chemical recycling-derived propylene, or may contain a chemical recycling-derived propylene, and a fossil fuel-derived propylene and/or a biomass-derived propylene. The chemical recycling-derived propylene can be obtained by conventionally known methods.

It is preferable for the propylene resin (A) to contain structural units derived from a chemical recycling-derived propylene from the viewpoint of reducing environmental load (mainly waste reduction). Even if the raw material monomers contain a chemical recycling-derived monomer, the chemical recycling-derived monomer is a monomer obtained by, for example, depolymerizing or thermally decomposing a polymer such as waste plastic back to a monomer unit such as propylene, or a monomer produced using such a monomer as a raw material, and therefore, if the polymer production conditions such as catalyst for polymerization, polymerization process, and polymerization temperature are equivalent, the molecular structure is equivalent to that of a propylene homopolymer composed of fossil fuel-derived monomers. Accordingly, performance is also expected to be the same.

It is preferable for the propylene block copolymer, an example of the propylene resin (A), to be constituted by a propylene homopolymer moiety and a propylene-α-olefin random copolymer moiety. Specific aspects of the propylene-α-olefin random copolymer moiety are the same as the specific aspects of the above-described propylene-α-olefin random copolymer.

In the case where the propylene block copolymer is solvent-fractionated with n-decane, it is separated into a component soluble in n-decane at 23°C (hereinafter, also referred to as "decane soluble portion") and a component insoluble in n-decane at 23°C (hereinafter, also referred to as "decane insoluble portion"). The content of the decane soluble portion is normally 5 to 30% by mass, preferably 5 to 25% by mass, and more preferably 8 to 18% by mass, and the content of the decane insoluble portion is normally 70 to 95% by mass, preferably 75 to 95% by mass, and more preferably 82 to 92% by mass.

The melt flow rate (MFR) of the propylene resin (A), as measured at a measurement temperature of 230°C and a load of 2.16 kg in accordance with ISO 1133-1:2011, is normally in the range of 10 to 110 g/10 min, preferably 20 to 100 g/10 min, and more preferably 30 to 90 g/10 min. When the MFR is in the above-described range, a composition containing the long glass fiber-reinforced propylene resin composition pellets containing the propylene resin (A) has good injection moldability.

### <Modified propylene resin (B)>

The modified propylene resin (B), one of the components used in the method for producing pellets of the present invention, is, for example, a modified polymer obtained by modifying the propylene resin (A), and preferably, an acid-modified polymer obtained by acid-modifying the propylene resin (A). Examples of the method for modifying the propylene resin (A) include conventionally known methods, such as graft modification and copolymerization. Note that the propylene resin (A) used in the present invention and the propylene resin (A) before modification of the modified propylene resin (B) used in the present invention may be the same resin or different resins.

Examples of the modifying agent used for modifying the propylene resin (A) include an acid modifying agent such as an unsaturated carboxylic acid and a derivative thereof. Examples of the unsaturated carboxylic acid include acrylic acid, methacrylic acid, maleic acid, nadic acid, fumaric acid, itaconic acid, crotonic acid, citraconic acid, sorbic acid, mesaconic acid, angelic acid, and phthalic acid. Examples of the derivative of an unsaturated carboxylic acid include an acid anhydride, an ester, an amide, an imide, and a metal salt, and specific examples thereof include maleic anhydride, itaconic anhydride, citraconic anhydride, nadic anhydride, phthalic anhydride, methyl acrylate, methyl methacrylate, ethyl acrylate, butyl acrylate, maleic acid monoethyl ester, acrylamide, maleic acid monoamide, maleimide, N-butylmaleimide, sodium acrylate, and sodium methacrylate. Among these, an unsaturated dicarboxylic acid and a derivative thereof are preferred, and maleic anhydride and phthalic anhydride are more preferred.

The acid addition amount of the modified propylene resin (B), in other words, the proportion of the acid modifying agent-derived structure in the modified propylene resin (B), is preferably 0.1 to 14% by mass, and more preferably 0.3 to 8% by mass. The acid addition amount is determined by measuring the IR spectrum of the resin and the area of the peak(s) at 1,670 cm⁻¹ to 1,810 cm⁻¹.

As the modified propylene resin (B), from the viewpoint of improving the affinity between the long glass fibers (E) and the propylene resin (A) and improving the strength or heat resistance of the molded body to be produced, a propylene resin modified with an unsaturated dicarboxylic acid and/or a derivative thereof is preferred, and a maleic anhydride-modified propylene resin is particularly preferred.

The melt flow rate (MFR) of the modified propylene resin (B), as measured at a measurement temperature of 230°C and a load of 2.16 kg in accordance with ISO 1133-1:2011, is preferably 50 g/10 min or more, and more preferably 80 g/10 min or more, the upper limit value of which is 1000 g/10 min, for example, preferably 300 g/10 min, more preferably 250 g/10 min, and still more preferably 200 g/10 min. When the MFR of the modified propylene resin (B) is in this range, a composition containing the long glass fiber-reinforced propylene resin composition pellets obtained by the production method of the present invention has flowability suited for injection molding.

The melt flow rate of the propylene resin (A) and the modified propylene resin (B) as a whole (in accordance with ISO 1133-1:2011, measurement temperature 230°C, load 2.16 kg) is, from the viewpoint of injection molding a molded body with excellent mechanical characteristics and good processability, preferably 25 to 500 g/10 min, and more preferably 50 to 400 g/10 min.

The modified propylene resin (B) may be used alone or as a mixture (composition) of two or more modified propylene resins.

### <Polypropylene wax (C)>

The polypropylene wax (C), one of the components used in the method for producing pellets of the present invention, satisfies the following (I) to (III). The polypropylene wax (C) may be modified. Examples of the polypropylene wax (C) include a homopolymer of propylene, a copolymer of propylene and an α-olefin having 2 to 10 carbon atoms excluding propylene, and a modified polymer obtained by modifying these polymers.

Specific examples of the α-olefin having 2 to 10 carbon atoms include ethylene and α-olefins having 10 or less carbon atoms among the specific examples of the α-olefins having 4 to 20 carbon atoms mentioned above.

(I) The melting point (Tm) is in the range of 120 to 165°C, preferably 130 to 155°C, as measured with a differential scanning calorimeter (DSC).

The polypropylene wax (C) with a melting point (Tm) in the above-described range is excellent in affinity with the propylene resin (A), which is the matrix resin, and yields long glass fiber-reinforced propylene resin composition pellets with excellent productivity and appearance.

The melting point (Tm) of the polypropylene wax (C) is defined as the peak top of the peak observed on the highest temperature side of the melting endothermic curve obtained by holding about 5 mg of the sample at 230°C for 10 minutes under a nitrogen gas atmosphere using a DSC, then lowering the temperature to 30°C at a rate of 10°C/min, holding at the temperature for 1 minute, and then raising the temperature at 10°C/min.

(II) The density as measured in accordance with JIS K 7112:1999 (Method A, 23°C) is in the range of 890 kg/m³ or more and less than 920 kg/m³, and preferably 895 to 915 kg/m³.

The polypropylene wax (C) with a density in the above-described range is excellent in affinity with the propylene resin (A), which is the matrix resin, and yields long glass fiber-reinforced propylene resin composition pellets with excellent productivity and appearance.

(III) The number average molecular weight (Mn) is in the range of 2,000 to 10,000, preferably 3,000 to 9,000, and more preferably 3,000 to 8,500, and the molecular weight distribution (weight average molecular weight (Mw)/number average molecular weight (Mn)) is in the range of 2.0 to 6.0, and preferably 2.2 to 5.8, as measured by a high temperature GPC (gel permeation chromatography) apparatus.

When the Mn and the Mw/Mn are in the above-described ranges, long glass fiber-reinforced propylene resin composition pellets with excellent productivity and physical properties can be obtained.

### <Gel permeation chromatography (GPC)>

Gel permeation chromatography (GPC) was used to perform measurement using the apparatus and conditions described below, and the obtained chromatogram was analyzed by a known method, thereby calculating the Mw value, Mn value, and Mw/Mn value.

### (GPC measurement apparatus)

Liquid chromatograph: manufactured by Tosoh Corporation, HLC-8321GPC/HT
Detector: RI
Column: TOSOH GMHHR-H(S)HT × 2 manufactured by Tosoh Corporation, connected in series

### (Measurement conditions)

Mobile phase medium: 1,2,4-trichlorobenzene
Flow rate: 1.0 ml/min
Measurement temperature: 145°C
Method for creating calibration curve: standard polystyrene sample was used to create calibration curve.
Molecular weight conversion: converted from molecular weight in terms of PS (polystyrene) to PP (polypropylene) by universal calibration method.
Sample concentration: 5 mg/10 ml
Sample solution volume: 300 µl

The polypropylene wax (C) may be an unmodified polypropylene wax, may be a modified polymer obtained by modifying an unmodified polypropylene wax, or may be an acid-modified polymer obtained by acid-modifying an unmodified polypropylene wax. Examples of the method for modifying an unmodified polypropylene wax include conventionally known methods, such as graft modification and copolymerization.

Examples of the modifying agent used for modifying an unmodified polypropylene wax include an acid modifying agent such as an unsaturated carboxylic acid and a derivative thereof. These examples are as mentioned above and are omitted in this section. As the acid modifying agent, an unsaturated dicarboxylic acid and a derivative thereof are preferred, and maleic anhydride and phthalic anhydride are more preferred. The acid addition amount of the modified polypropylene wax, in other words, the proportion of the acid modifying agent-derived structure in the modified polypropylene wax, is preferably 0.1 to 14% by mass, and more preferably 0.3 to 8% by mass. As the modified polypropylene wax, a polypropylene wax modified with an unsaturated dicarboxylic acid and/or a derivative thereof is preferred, and a maleic anhydride-modified polypropylene wax is particularly preferred.

It is preferable for the polypropylene wax (C) to further satisfy the following (IV).
(IV) The acid number is 50 mgKOH/g or less, preferably 0 to 30 mgKOH/g, more preferably 0 to 10 mgKOH/g, and still more preferably 0 to 1 mgKOH/g, as measured in accordance with JIS K 0070:1992. When the acid number is in the above-described range, long glass fiber-reinforced propylene resin composition pellets with more excellent mechanical properties can be obtained without impairing the adhesion between the propylene resin (A) and the long glass fibers (E).

The polypropylene wax (C) may be used alone or as a mixture (composition) of two or more polypropylene waxes.

### <Organic peroxide (D)>

The organic peroxide (D), one of the components used in the method for producing pellets of the present invention, is one type of crosslinking agent, and specific examples thereof include dicumyl peroxide (DCP), di-tert-butyl peroxide, 2,5-di-(tert-butylperoxy)hexane, 2,5-dimethyl-2,5-di-(tert-butylperoxy) hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy) valerate, benzoyl peroxide, p-chlorobenzoyl peroxide, 2,4-dichlorobenzoyl peroxide, tert-butyl peroxybenzoate, tert-butyl peroxyisopropyl carbonate, diacetyl peroxide, lauroyl peroxide, and tert-butyl cumyl peroxide.

Among these, dicumyl peroxide (DCP), 2,5-di-(tert-butylperoxy) hexane, 2,5-dimethyl-2,5-di-(tert-butylperoxy) hexane, 2,5-dimethyl-2,5-di-(tert-butylperoxy)hexyne-3, 1,3-bis(tert-butylperoxyisopropyl)benzene, 1,1-bis(tert-butylperoxy)-3,3,5-trimethylcyclohexane, and n-butyl-4,4-bis(tert-butylperoxy)valerate are preferred.

The organic peroxide (D) may be used alone or in combination of two or more.

### <Long glass fibers (E)>

The long glass fibers (E), one of the components used in the method for producing pellets of the present invention, are various types of known long glass fibers, and specific examples thereof may include those obtained by melt-spinning glass, such as E glass (electrical glass), C glass (chemical glass), A glass (alkali glass), S glass (high strength glass), and alkali resistant glass, into filamentous fibers.

As the long glass fibers (E), glass long fibers are normally used. As a raw material for the long glass fibers, a bundle of continuous long glass fibers is normally used, which is commercially available as a glass roving. Their average fiber diameter is normally 3 to 30 µm, preferably 13 to 20 µm, and still more preferably 16 to 18 µm, and the number of bundled filaments is normally 400 to 10,000, preferably 1,000 to 6,000, and still more preferably 3,000 to 5,000.

Also, as described in JPH6-114830A, multiple fiber bundles can be bundled for use.

Functional groups may be introduced to the surface of the long glass fibers (E) by a variety of surface treatment methods, such as electrolytic treatment or treatment with a sizing agent. For the surface treatment, the use of a sizing agent is preferred, and the use of a sizing agent containing a coupling agent is particularly preferred. The use of surface-treated glass fibers improves the adhesiveness between long glass fibers and resin components, yielding a molded body with good strength and appearance.

Examples of the sizing agent include those containing the coupling agent described in JP2003-253563A. Examples of the coupling agent include a silane coupling agent such as aminosilane and epoxysilane, and a titanium coupling agent.

Also, as the sizing agent, those containing, in addition to the coupling agent, a resin emulsion for easier handling are preferred. Examples of the resin emulsion contained in the sizing agent include those based on urethane, olefin, acryl, nylon, butadiene, or epoxy, of which those based on urethane or olefin are preferred.

The long glass fibers (E) may be used alone or in combination of two or more.

### <Olefinic polymer (H)>

The olefinic polymer (H) used in the method for producing an injection molded body of the present invention is, for example, a homopolymer of an α-olefin, and a copolymer of two or more α-olefins to form a resin polymer, and examples thereof include a homopolymer of ethylene, propylene, 1-butene, and 4-methyl-1-pentene, and a copolymer of two or more α-olefins. Specific examples of the olefinic polymer include an ethylene polymer such as high density polyethylene (HDPE), medium density polyethylene (MDPE), linear low density polyethylene (LLDPE), and high pressure low density polyethylene (HP-LDPE), a propylene polymer such as propylene homopolymer, propylene random copolymer, and propylene block copolymer, poly-1-butene and poly-4-methyl-1-pentene.

The olefinic polymer (H) may be used alone or as a mixture (composition) of two or more olefinic polymers.

### [Method for producing long glass fiber-reinforced propylene resin composition pellets]

The method for producing long glass fiber-reinforced propylene resin composition pellets of the present invention [method for producing pellets of the present invention] includes, in one aspect, a step of filling an impregnation die with a melt mixture in which the propylene resin (A), the modified propylene resin (B), the polypropylene wax (C), and the organic peroxide (D) have been melt-mixed with a twin screw extruder, then passing a bundle of the long glass fibers (E) through the impregnation die, and impregnating the bundle of long glass fibers (E) with the melt mixture to obtain a strand-shaped molded body, and a step of cutting the strand-shaped molded body preferably into a length of 5 to 9 mm to obtain long glass fiber-reinforced propylene resin composition pellets.

Since the long glass fiber-reinforced propylene resin composition pellets obtained by the method for producing pellets of the present invention contain the modified propylene resin (B), the adhesiveness between the propylene resin (A) and the bundle of long glass fibers (E) is good. By using the polypropylene wax (C), long glass fiber-reinforced propylene resin composition pellets can be produced without impairing productivity. A molded body obtained by using such long glass fiber-reinforced propylene resin composition pellets obtained by the production method of the present invention is excellent in appearance and physical properties (for example, mechanical properties such as tensile breaking stress).

In the production method of the present invention, the MFR of the melt mixture is preferably in the range of 200 to 600 g/10 min, more preferably 280 to 520 g/10 min, still more preferably 280 to 450 g/10 min, and particularly preferably 280 to 400 g/10 min. The MFR of the melt mixture is the value measured at a measurement temperature of 230°C and a load of 2.16 kg in accordance with ISO 1133-1:2011.

When the MFR of the melt mixture is in the above-described range, long glass fiber-reinforced propylene resin composition pellets can be provided without impairing the productivity and physical properties of the resulting long glass fiber-reinforced propylene resin composition pellets.

In the method for producing pellets of the present invention, the temperature at which the impregnation die is filled with the melt mixture is preferably in the range of 240 to 320°C, and more preferably 260 to 300°C. When the temperature of filling the melt mixture is in the above-described range, the bundle of long glass fibers (E) is sufficiently impregnated with the melt mixture.

In one aspect of the method for producing pellets of the present invention, the (A) component is used in the range of preferably 80 to 98 parts by mass and more preferably 91 to 95 parts by mass, the (B) component is used in the range of preferably 1 to 10 parts by mass and more preferably 3 to 5 parts by mass, and the (C) component is used in the range of preferably 1 to 10 parts by mass and more preferably 2 to 4 parts by mass, provided that the total of the (A), (B), and (C) components is 100 parts by mass, and the (D) component is used in the range of preferably 0.001 to 0.5 parts by mass and more preferably 0.01 to 0.05 parts by mass, and the (E) component is used in the range of preferably 50 to 150 parts by mass and more preferably 60 to 140 parts by mass, with respect to 100 parts by mass of the total of the (A), (B), and (C) components.

When the amounts of the (A) component and other components used in the method for producing long glass fiber-reinforced propylene resin composition pellets satisfy the above-described ranges, productivity is excellent, and a molded body obtained using the composition has better physical properties. That is, it is possible to produce long glass fiber-reinforced propylene resin composition pellets with a good balance between productivity and physical properties.

In the method for producing pellets of the present invention, in addition to the above-described components, additives may be compounded in the melt mixture as necessary, such as a heat resistant stabilizer, an anti-static agent, a weather resistant stabilizer, a light resistant stabilizer, an anti-aging agent, an anti-oxidant, a copper inhibitor, a fatty acid metal salt, a softening agent, a dispersing agent (excluding the polypropylene wax (C)), a filler, a coloring agent, a pigment, and a foaming agent, to the extent that the effects of the present invention are not impaired (for example, in a proportion of 5% by mass or less with respect to 100% by mass of the melt mixture). These components may be made into a masterbatch.

### [Long glass fiber-reinforced propylene resin composition pellets]

The long glass fiber-reinforced propylene resin composition pellets of the present invention [hereinafter, sometimes abbreviated to "pellets of the present invention"] contain, in one aspect, the propylene resin (A), the modified propylene resin (B), the optionally modified polypropylene wax (C), and the long glass fibers (E).

The pellets of the present invention may contain the organic peroxide (D) as desired. The pellets of the present invention may contain additives as desired.

The details of each component are as mentioned above and are omitted in this section.

The pellets of the present invention preferably have a length of 5 to 9 mm. The long glass fibers (E) contained in the pellets of the present invention preferably have a length of 5 to 9 mm.

In one aspect, the long glass fibers (E) contained in the pellets are approximately aligned in the longitudinal direction of the pellets, and the length of the long glass fibers (E) contained in the pellets and the length of the pellets are approximately the same.

The pellets of the present invention can be produced by, for example, the above-mentioned method for producing pellets of the present invention.

The pellets of the present invention contain the (A) component in the range of preferably 80 to 98 parts by mass and more preferably 91 to 95 parts by mass, the (B) component in the range of preferably 1 to 10 parts by mass and more preferably 3 to 5 parts by mass, and the (C) component in the range of preferably 1 to 10 parts by mass and more preferably 2 to 4 parts by mass, provided that the total of the (A), (B), and (C) components is 100 parts by mass, and contain the (E) component in the range of preferably 50 to 150 parts by mass and more preferably 60 to 140 parts by mass with respect to 100 parts by mass of the total of the (A), (B), and (C) components. The pellets of the present invention may contain the (D) component in the range of 0.001 to 0.5 parts by mass or in the range of 0.01 to 0.05 parts by mass with respect to 100 parts by mass of the total of the (A), (B), and (C) components.

Such a long glass fiber-reinforced propylene resin composition can be molded and processed for use in the applications described below, where the long glass fiber-reinforced propylene resin composition pellets are used.

### [Applications of long glass fiber-reinforced propylene resin composition pellets]

The long glass fiber-reinforced propylene resin composition pellets obtained by the production method of the present invention can be used in, for example, automobile components such as an instrument panel, a console box, a back door module, a tailgate, a front door module, an accelerator pedal module, an airbag housing, an air channel, a sunroof structure, a storage battery outer box, an air cleaner case, a shift lever base, a roof rail, a roof module, a front end module, a door step, a door carrier module, a grip, an armrest core, a muffler cover, and a wheel cap, and electric appliances such as a washing machine, a washing and drying machine, a refrigerator, and a vacuum cleaner.

### [Method for producing injection molded body]

The method for producing an injection molded body of the present invention include, in one aspect, a step of obtaining the long glass fiber-reinforced propylene resin composition pellets, a step of dry blending 10 to 90 parts by mass, preferably 20 to 80 parts by mass, of the composition pellets obtained in the above step and 90 to 10 parts by mass, preferably 80 to 20 parts by mass, of the above-described olefinic polymer (H) pellets to obtain a mixture, provided that the total of the composition pellets and the olefinic polymer (H) pellets is 100 parts by mass, and a step of injection molding the mixture.

The long glass fiber-reinforced propylene resin composition pellets can be obtained by, for example, the above-mentioned method for producing pellets of the present invention.

The injection molded body obtained by the method for producing an injection molded body of the present invention can be suitably used in various fields, such as automobile interior and exterior materials (such as automobile interior and exterior components) and home appliance components. Examples of the automobile interior and exterior components include an inner material for the back door.

### Examples

The present invention will be more specifically described below based on Examples, but the present invention is not limited to these Examples.

### [Materials]

The propylene resin (A), the modified propylene resin (B), and the polypropylene wax (C) used in Examples and Comparative Examples are shown below.

### <Propylene resin (A)>

A propylene homopolymer [PP(A-1)] (manufactured by Prime Polymer Co., Ltd., propylene homopolymer, MFR = 60 g/10 min) was used as the propylene resin (A).

### <Modified propylene resin (B)>

A maleic anhydride-modified polypropylene (B-1) (manufactured by Addivant Japan, product name "Polybond 3200") with a maleic anhydride graft amount of 0.5% by mass was used as the modified propylene resin (B).

### <Polypropylene wax (C)>

The following polypropylene waxes (C-1) to (C-3) and a modified polypropylene wax (C-4) were used as the polypropylene wax (C) [PP wax (C)]. None of the polypropylene waxes (C-1) to (C-3) are modified.

### (1) Polypropylene wax (C-1)

Product name "NP055": manufactured by Mitsui Chemicals, Inc., Tm (melting point of first peak): 136°C, number average molecular weight (Mn): 3,320, molecular weight distribution: 2.3, acid number: 0 mgKOH/g, density: 900 kg/m³.

### (2) Polypropylene wax (C-2)

Product name "NP500": manufactured by Mitsui Chemicals, Inc., Tm (melting point of first peak): 153°C, number average molecular weight (Mn): 5,140, molecular weight distribution: 4.0, acid number: 0 mgKOH/g, density: 905 kg/m³.

### (3) Polypropylene wax (C-3)

Product name "NP506": manufactured by Mitsui Chemicals, Inc., Tm (melting point of first peak): 128°C, number average molecular weight (Mn): 8,150, molecular weight distribution: 3.2, acid number: 0 mgKOH/g, density: 897 kg/m³.

### (4) Modified polypropylene wax (C-4)

Product name "NP0555A": manufactured by Mitsui Chemicals, Inc., Tm (melting point of first peak): 129°C, number average molecular weight (Mn): 6,150, molecular weight distribution: 3.9, acid number: 45 mgKOH/g, density: 919 kg/m³.

### <Other waxes (G)>

The following polyethylene waxes (PE waxes) (G-1) and (G-2), and a microcrystalline wax (MC wax) (G-3) were used as other waxes (G). None of the polyethylene waxes (G-1) and (G-2) are modified.

### (1) Polyethylene wax (G-1)

Product name "NL900": manufactured by Mitsui Chemicals, Inc., Tm: 103°C, number average molecular weight (Mn): 3,810, molecular weight distribution: 5.1, density: 920 kg/m³.

### (2) Polyethylene wax (G-2)

Product name "NL100": manufactured by Mitsui Chemicals, Inc., Tm: 116°C, number average molecular weight (Mn): 1,380, molecular weight distribution: 3.5, density: 920 kg/m³.

### (3) Microcrystalline wax (G-3)

Product name "Hi-Mic 1080": manufactured by Nippon Seiro Co., Ltd., microcrystalline wax with a Tm: melting point of 84°C.

The organic peroxide (D), the long glass fibers (E), and the anti-oxidant (F) used in Examples and Comparative Examples are shown below.

### (1) Organic peroxide (D)

1,3-Bis(tert-butylperoxyisopropyl)benzene: product name "Perkadox 14": manufactured by Kayaku Akzo Corporation was used as the organic peroxide (D-1).

### (2) Long glass fibers (E)

A glass fiber roving with a glass fiber diameter of 17 µm and 2400 tex, manufactured by Nippon Electric Glass Co., Ltd., was used as the long glass fibers (E-1).

### (3) Anti-oxidant (F)

The following two anti-oxidants were used as the anti-oxidant.
(F-1) Product name "Irg1010": phenolic anti-oxidant manufactured by BASF SE, Irganox (R) 1010.
(F-2) Product name "Irg168": phosphorus anti-oxidant manufactured by BASF SE, Irganox (R) 168.

### [Examples 1 to 6 and Comparative Examples 1 to 5]

The components shown in Table 1 were used as the (A) component, (B) component, (C) component, (D) component, (F) component, (G) component, and the like, and were uniformly mixed with a tumbler mixer. The mixture was supplied to a co-rotating twin screw kneader (manufactured by Kobe Steel, Ltd., KTX30 (R)), and the melt mixture was filled into an impregnation die at the resin temperatures described in Table 1 (melt temperature; for example, a temperature of 260°C in the case of Example 1). Next, the long glass fiber roving ((E-1) component) was placed in the impregnation die and impregnated with the melt mixture, then taken up into a strand shape and cut with a pelletizer to obtain long glass fiber-reinforced propylene resin composition pellets with a length of about 8 mm. The rate at which the strand-shaped product was taken up was determined by checking for breakage of the long glass fibers at the exit of the impregnation die, increasing the take-up rate to a rate at which no breakage occurred, and using the maximum rate as the take-up rate (production rate).

### [Measurement methods and evaluation methods]

The measurement methods for the compositions used in Examples and Comparative Examples, as well as the evaluation methods for the molded bodies, are as follows.

### <MFR of melt mixture [(A) + (B) + (C) + (D) components]>

The mixture of (A) + (B) + (C) + (D) components (in Comparative Examples, the mixture of (A) + (B) + (D) components or the mixture of (A) + (B) + (G) + (D) components) was supplied to a co-rotating twin screw kneader (manufactured by Kobe Steel, Ltd., KTX30 (R)), filled into an impregnation die, and then these mixtures were discharged from the impregnation die and the MFR was measured at a measurement temperature of 230°C and a load of 2.16 kg.

### <Unopened glass (appearance)>

Using the long glass fiber-reinforced propylene resin composition pellets obtained in Examples and Comparative Examples, 30 injection molded pieces with a size of 80 mm × 240 mm × 3 mmt were produced with an injection molding machine at a cylinder temperature of 240°C and a mold temperature of 40°C. The number of white spots derived from unopened glass in the 30 injection molded pieces was counted as unopened glass.

### <Tensile breaking stress>

Using the long glass fiber-reinforced propylene resin composition pellets obtained in Examples and Comparative Examples, ISO No. 1 dumbbells were molded with an injection molding machine at a cylinder temperature of 240°C and a mold temperature of 40°C. The obtained ISO No. 1 dumbbells were used to perform a tensile breaking test under the condition of a tensile rate of 5 mm/min, in accordance with ISO 527.

The results are shown in Table 1.

**Table 1**

| | | Unit | Example | | | | | | Comparative Example | | | | |
|---|---|---|---|---|---|---|---|---|---|---|---|---|---|
| | | | 1 | 2 | 3 | 4 | 5 | 6 | 1 | 2 | 3 | 4 | 5 |
| Propylene resin (A) | A-1 | Parts by mass | 95 | 93 | 91 | 91 | 93 | 86 | 96 | 96 | 93 | 93 | 93 |
| Modified propylene resin (B) | B-1 | Parts by mass | 4 | 4 | 4 | 4 | 4 | 4 | 4 | 4 | 4 | 4 | 4 |
| PP wax (C) | C-1 | Parts by mass | 1 | 3 | | | | 10 | | | | | |
| PP wax (C) | C-2 | Parts by mass | | | 5 | | | | | | | | |
| PP wax (C) | C-3 | Parts by mass | | | | 5 | | | | | | | |
| PP wax (C) | C-4 | Parts by mass | | | | | 3 | | | | | | |
| PE wax (G) | G-1 | Parts by mass | | | | | | | | | 3 | | |
| PE wax (G) | G-2 | Parts by mass | | | | | | | | | | 3 | |
| MC wax (G) | G-3 | Parts by mass | | | | | | | | | | | 3 |
| Organic peroxide (D) | D-1 | Parts by mass | 0.01 | 0.01 | 0.01 | 0.01 | 0.01 | 0.01 | 0.01 | 0.01 | 0.01 | 0.01 | 0.01 |
| Anti-oxidant (F) | F-1 | Parts by mass | 0.1 | 0.1 | 0.1 | 0.1 | 0.1 | 0.1 | 0.1 | 0.1 | 0.1 | 0.1 | 0.1 |
| Anti-oxidant (F) | F-2 | Parts by mass | 0.1 | 0.1 | 0.1 | 0.1 | 0.1 | 0.1 | 0.1 | 0.1 | 0.1 | 0.1 | 0.1 |
| Long glass fibers (E) | E-1 | Parts by mass | 100 | 100 | 100 | 100 | 100 | 100 | 100 | 100 | 100 | 100 | 100 |
| Resin temperature in impregnation die | | °C | 260 | 260 | 260 | 260 | 260 | 260 | 260 | 220 | 260 | 260 | 240 |
| Production rate | | m/min | 35 | 40 | 35 | 35 | 40 | 50 | 20 | 10 | 20 | 35 | 25 |
| MFR | | g/10min | 285 | 319 | 371 | 359 | 281 | 530 | 265 | 230 | 298 | 410 | 325 |
| Appearance | | Number | 0 | 0 | 0 | 1 | 0 | 0 | 0 | - | 0 | 3 | 0 |
| Tensile breaking stress | | MPa | 160 | 162 | 160 | 160 | 120 | 150 | 160 | - | 162 | 160 | 160 |

As is obvious from Table 1, the addition of the polypropylene wax (C) in Examples 1 to 4 enables the production of long glass fiber-reinforced propylene resin composition pellets without reducing the production rate, and the molded bodies obtained using such pellets are excellent in appearance and tensile breaking stress.

Note that the long glass fiber-reinforced propylene resin composition pellets of Example 6, in which the amount of the polypropylene wax (C) compounded is 10 parts by mass, is more excellent in productivity, but the molded body obtained using such a composition has a somewhat lower tensile breaking stress.

Meanwhile, in the method where no polypropylene wax (C) is added, the production rate of long glass fiber-reinforced propylene resin composition pellets was reduced, but the molded body obtained using the obtained composition pellets (Comparative Example 1) had no problems in appearance and tensile breaking stress. Note that, in Comparative Example 2, when the resin temperature in the impregnation die was set to 220°C, the viscosity of the melt resin increased and it was not possible to produce long glass fiber-reinforced propylene resin composition pellets.

In the case where the polyethylene wax (G) was used instead of the polypropylene wax (C) used in Examples 1 to 4 [Comparative Examples 3 and 4], the molded bodies obtained using such pellets were observed to have lower production rates and poor appearance due to poor affinity between the propylene resin (A) and the polyethylene wax (G).

Example 5, where the modified PP wax (C-4) was used, exhibited a high production rate, although the tensile breaking stress was lower compared to Examples 1 to 4 possibly because the modified PP wax (C-4) affects the adhesion between the propylene resin (A) and the long glass fibers (E). It is thought that the modified PP wax exhibited a lubricant-like effect on the long glass fibers, which mitigated the flow resistance near the nozzle and increased the production rate.

Also, in the case where the MC wax was used instead of the polypropylene wax (C) (Comparative Example 6), the production rate of long glass fiber-reinforced propylene resin composition pellets was reduced, but the molded body obtained using the obtained composition pellets had no problems in appearance and tensile breaking stress.

### Industrial Applicability

The fiber-reinforced polypropylene resin composition pellets of the present invention can be suitably used as a material for molded bodies in various fields, such as automobile interior and exterior components such as an instrument panel and a console box, and home appliance components.

## Claims

1. A method for producing long glass fiber-reinforced propylene resin composition pellets, the method comprising:
a step of filling an impregnation die with a melt mixture in which a propylene resin (A), a modified propylene resin (B), an optionally modified polypropylene wax (C), and an organic peroxide (D) have been melt-mixed with a twin screw extruder, then passing a bundle of long glass fibers (E) through the impregnation die, and impregnating the bundle of long glass fibers (E) with the melt mixture to obtain a strand-shaped molded body; and
a step of cutting the strand-shaped molded body to obtain long glass fiber-reinforced propylene resin composition pellets,
wherein the polypropylene wax (C) satisfies the following (I) to (III):
(I) a melting point (Tm) is in a range of 120 to 165°C as measured with a differential scanning calorimeter (DSC);
(II) a density is in a range of 890 kg/m³ or more and less than 920 kg/m³; and
(III) a number average molecular weight (Mn) is in a range of 2,000 to 10,000 and a molecular weight distribution (Mw/Mn) is in a range of 2.0 to 6.0, as measured by gel permeation chromatography (GPC).

2. The method for producing long glass fiber-reinforced propylene resin composition pellets according to claim 1, wherein the melt mixture has a melt flow rate (MFR) in a range of 200 to 600 g/10 min, as measured at a measurement temperature of 230°C and a load of 2.16 kg.

3. The method for producing long glass fiber-reinforced propylene resin composition pellets according to claim 1, wherein the impregnation die is filled with the melt mixture at a melt temperature in a range of 240 to 320°C.

4. The method for producing long glass fiber-reinforced propylene resin composition pellets according to claim 1, wherein the polypropylene wax (C) further satisfies the following (IV):
(IV) an acid number is 50 mgKOH/g or less as measured in accordance with JIS K 0070:1992.

5. The method for producing long glass fiber-reinforced propylene resin composition pellets according to claim 1, wherein the (A) component, the (B) component, and the (C) component are used in a range of 80 to 98 parts by mass, 1 to 10 parts by mass, and 1 to 10 parts by mass, respectively, provided that a total of the (A), (B), and (C) components is 100 parts by mass, and the (D) component and the (E) component are used in a range of 0.001 to 0.5 parts by mass and 50 to 150 parts by mass, respectively, with respect to 100 parts by mass of the total of the (A), (B), and (C) components.

6. The method for producing long glass fiber-reinforced propylene resin composition pellets according to claim 1, wherein the strand-shaped molded body is cut into a length of 5 to 9 mm to obtain the long glass fiber-reinforced propylene resin composition pellets.

7. A method for producing an injection molded body, the method comprising:
a step of obtaining long glass fiber-reinforced propylene resin composition pellets by the production method according to any one of claims 1 to 6;
a step of dry blending 10 to 90 parts by mass of the composition pellets obtained in the above step and 90 to 10 parts by mass of olefinic polymer (H) pellets to obtain a mixture, provided that a total of the composition pellets and the olefinic polymer (H) pellets is 100 parts by mass; and
a step of injection molding the mixture.

8. A method for producing an automobile interior and exterior material, the method comprising a step of obtaining an injection molded body by the production method according to claim 7.

9. Long glass fiber-reinforced propylene resin composition pellets, comprising:
a propylene resin (A);
a modified propylene resin (B);
an optionally modified polypropylene wax (C) satisfying the following (I) to (III); and
long glass fibers (E);
(I) a melting point (Tm) is in a range of 120 to 165°C as measured with a differential scanning calorimeter (DSC);
(II) a density is in a range of 890 kg/m³ or more and less than 920 kg/m³; and
(III) a number average molecular weight (Mn) is in a range of 2,000 to 10,000 and a molecular weight distribution (Mw/Mn) is in a range of 2.0 to 6.0, as measured by gel permeation chromatography (GPC).

10. The long glass fiber-reinforced propylene resin composition pellets according to claim 9, wherein the polypropylene wax (C) further satisfies the following (IV): (IV) an acid number is 50 mgKOH/g or less as measured in accordance with JIS K 0070:1992.

11. The long glass fiber-reinforced propylene resin composition pellets according to claim 9 or 10, wherein the long glass fiber-reinforced propylene resin composition pellets comprise the (A) component, the (B) component, and the (C) component in a range of 80 to 98 parts by mass, 1 to 10 parts by mass, and 1 to 10 parts by mass, respectively, provided that a total of the (A), (B), and (C) components is 100 parts by mass, and comprise the (E) component in a range of 50 to 150 parts by mass with respect to 100 parts by mass of the total of the (A), (B), and (C) components.

12. The long glass fiber-reinforced propylene resin composition pellets according to claim 9 or 10, wherein the long glass fiber-reinforced propylene resin composition pellets have a length of 5 to 9 mm.
